# FASCICULE DE BREVET EUROPEEN

(11) **EP 0 869 713 B1**
(45) Date de publication et mention de la délivrance du brevet: **24.10.2001**
(21) Numéro de dépôt: 96927729.2
(22) Date de dépôt: 02.08.1996
(51) Int. Cl.: A01N 25/30, A01N 57/20

(54) **COMPOSITION PHYTOSANITAIRE COMPRENANT AU MOINS UNE MATIERE ACTIVE HYDROSOLUBLE ET AU MOINS UNE AMIDOAMINE POLYALCOXYLEE**
PFLANZENSCHUTZMITTEL ENTHALTEND MINDESTENS EIN WASSERLÖSLICHEN WIRKSTOFF UND MINDESTENS EIN POLYALKOXYLIERTES AMIDOAMIN
PLANT PROTECTION COMPOSITION CONTAINING ONE OR MORE WATER SOLUBLE ACTIVE MATERIALS AND ONE OR MORE POLYALKOXYLATED AMIDOAMINES

(30) Priorité: 04.08.1995 FR 9509603
(43) Date de publication de la demande: 14.10.1998
(73) Titulaire: RHODIA CHIMIE, 92408 Courbevoie Cédex (FR)
(72) Inventeur: GUBELMANN, Isabelle, F-75016 Paris (FR)
(74) Mandataire: Dubruc, Philippe
(86) Numéro de dépôt international: FR9601230
(87) Numéro de publication internationale: WO9705779

(56) Documents cités:
- EP-A- 0 472 310
- WO-A-94/02021
- FR-A- 2 648 316
- US-A- 5 389 598

## Description

La présente invention a pour objet une composition phytosanitaire comprenant au moins une amidoamine polyalcoxylée.

L'application des matières actives phytosanitaires au niveau des sites à traiter est généralement réalisée par pulvérisation de dispersions fluides correspondantes. Il s'agit ou de solutions dans des solvants organiques, ou de dispersions ou solutions aqueuses.

Dans le cas des solutions aqueuses, au moins un tensio-actif et/ou un autre composé est généralement présent en vue favoriser la solubilisation et/ou de renforcer l'activité biologique de la matière active considérée.

A titre illustratif, on peut en particulier mentionner les formulations aqueuses classiques de glyphosate. Le glyphosate est un herbicide de type aminophosphate très utilisé et ses formulations commerciales incorporent avantageusement une amine éthoxylée.

Dans la demande de brevet français FR 2 648 316, il est par exemple décrit des fomulations phytosanitaires concentrées comprenant de la N-phosphonométhylglycine ou l'un de ses dérivés, et en tant qu'activateur, un tensioactif correspondant à une amine polyalcoxylée.

La présence d'amine éthoxylée renforce considérablement l'activité biologique du glyphosate et en outre conduit à une formulation qui demeure efficace quelles que soient les conditions climatiques d'utilisation. Vraisemblablement, l'amine éthoxylée active la diffusion du glyphosate à travers la barrière cuticulaire des plantes et/ou végétaux.

L'intérêt de ces composés, à effet synergique sur l'activité biologique, et éventuellement bénéfique sur la solubilité du principe actif auxquels ils sont associés, est malheureusement souvent affecté par leur toxicité chimique. En effet, les solvants organiques, tensioactifs ou composés annexes comme les amines éthoxylées posent d'évidents problèmes de toxicité. Les amines éthoxylées s'avèrent ainsi nettement plus irritantes et toxiques que le glyphosate en lui-même.

Dans le brevet américain US 5 389 598, il est proposé une solution à l'inconvénient causé par le caractère irritant des amines alcoxylées. Ainsi, la formulation phytosanitaire comprend, outre ladite amine alkylée alcoxylée, un agent supplémentaire choisi parmi les mono- ou diacides carboxyliques, saturés ou non, en C₆-C₂₂, et dont le rôle est de baisser la toxicité de l'amine.

La prise en compte de plus en plus sérieuse des différents problèmes de nature écologique conduit à la recherche de compositions phytosanitaires, hydrosolubles de préférence, dotées d'une activité biologique comparable aux formulations actuelles et en revanche de toxicité nettement amoindrie.

La présente invention a précisément pour objet de proposer une nouvelle formulation phytosanitaire conforme à ces exigences.

Plus particulièrement, la présente invention concerne une composition comprenant à titre de principe actif au moins une matière active phytosanitaire hydrosoluble et comprenant en outre une quantité efficace d'au moins une amidoamine polyalcoxylée de formule moyenne (1) ou (2) : 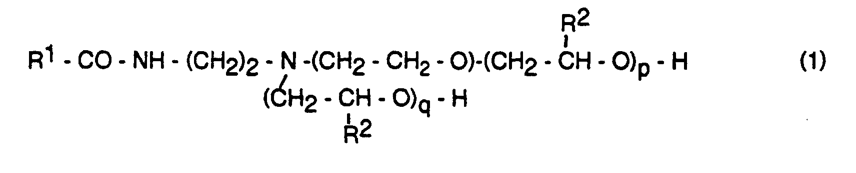 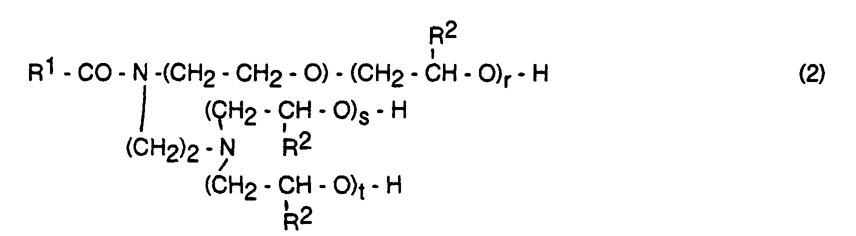 dans lesquelles :
- R¹, identiques ou différents, représentent un groupe hydrocarboné en C₂-C₂₂ alkyle ou alkényle, linéaire ou ramifié, cycloalkyle ou alkylaryle,
- R², identiques ou différents, représentent l'hydrogène ou un radical alkyle en C₁-C₄,
- p, q, r, s et t, identiques ou différents, représentent des nombres entiers pouvant être nuls avec p + q compris entre 1 et 20 et r + s + t compris entre 1 et 20.

De manière inattendue, les amidoamines précitées possèdent, en présence de matière active phytosanitaire, une solubilité adéquate en milieu aqueux et un effet bénéfique sur la diffusion de cette matière active phytosanitaire au sein des membranes cuticulaires.

De tels composés remplacent notamment avantageusement les amines éthoxylées classiques dans les formulations phytosanitaires impliquant, par exemple, à titre de matière active au moins un dérivé d'aminophosphate. Ils conduisent à des formulations d'activité très satisfaisante et dotées d'une tension superficielle adéquate.

De plus, ces composés présentent l'avantage d'être biodégradables et présentent un caractère irritant très faible. Il est en effet à noter que ces produits peuvent notamment entrer dans la composition de formulations cosmétiques du fait de cette propriété.

Enfin, outre les avantages mentionnés ci-dessus, on a constaté que les amidoamines précitées possèdent aussi des propriétés d'activateur biologique des matières actives phytosanitaires.

Mais d'autres avantages et caractéristiques de la présente invention apparaîtront plus clairement à la lecture de la description et des exemples qui vont suivre.

Par matière active phytosanitaire, on entend désigner selon l'invention les insecticides, les herbicides, les fongicides mais également les éléments nutritifs favorisant la croissance et le développement des plantes. Il s'agit de préférence d'herbicides.

Parmi les herbicides préférés selon l'invention on citera tout particulièrement les dérivés aminophosphates et préférentiellement le glyphosate, le sulphosate, le glufosinate, ainsi que les sels organiques ou inorganiques respectifs de ces composés. Le glyphosate, et de préférence ses dérivés, sont employés.

Par glyphosate, on désigne plus particulièrement la N-phosphonométhylglycine ainsi que tout dérivé de celle-ci conduisant en solution aqueuse à des anions glyphosates.

A titre de dérivés, on peut plus particulièrement citer ses sels de métaux alcalins comme le sodium ou le potassium, ses sels d'ammonium, substitués ou non, dont les amines secondaires ou primaires comme l'isopropylamine, la diméthylamine ou les diamines comme l'éthylènediamine, ou encore ses sels de sulfonium, en particulier le triméthylsulfonium, seuls ou en combinaison.

En tant que dérivés préférés du glyphosate en application herbicide, on peut citer notamment le sel d'isopropylamine et le sel de triméthylsulfonium.

En ce qui concerne les éléments nutritifs, il s'agit de préférence de sels métalliques comme le zinc et le fer, par exemple, et préférentiellement de manganèse. Ces sels sont utilisés sous forme de chélates de type E.D.T.A. par exemple ou de sulfates.

Les compositions selon l'invention contiennent une quantité efficace d'au moins une amidoamine polyalcoxylée de formule moyenne (1) ou (2) définies ci-dessus.

Selon un mode de réalisation particulièrement approprié de l'invention, la composition phytosanitaire comprend une quantité efficace d'un mélange d'amidoamines polyacoxylées de formules moyennes (1) et (2).

Selon une variante préférée de la présente invention, le radical R² représente l'hydrogène ou un radical méthyle.

Un mode de réalisation particulier de l'invention est constitué par des amidoamines polyalcoxylées dans lesquelles les coefficients p, q, r, s et t, identiques ou différents sont tels que la somme de p et q d'une part, et la somme de r, s et t d'autre part, sont comprises chacune entre 2 et 10.

A titre d'amidoamines polyalcoxylées particulièrement convenables, on peut citer les hydroxyéthylcocoylamidoamines polyéthoxylées comprenant 3 moles d'oxyde d'éthylène, correspondant à la formule (1) et/ou (2). Selon un mode de réalisation préféré de l'invention, on emploie de telles amidoamines en mélange (formules (1) et (2)).

Ces amidoamines polyalcoxylées de formule (1) et (2) peuvent être préparées par exemple par polycondensation d'oxyde d'alkylène sur une amidoamine de formule (3) ou (4) ou un mélange d'amidoamines de formules (3) et (4) :

R¹ - CO - NH-(CH₂)₂-NH-(CH₂)₂-OH (3)

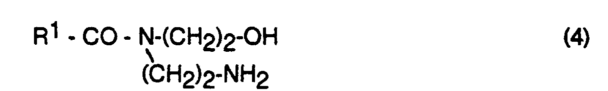

formules dans lesquelles R¹ a la définition donnée ci-dessus.

Cette opération peut être réalisée à une température de l'ordre de 70 à 180°C, de préférence de l'ordre de 110 à 150°C, par addition en continu du dérivé activé de l'alkylène glycol selon une proportion de l'ordre de 1 à 50 équivalents molaires d'oxyde d'alkylène par rapport aux amidoamines de formule (3) et (4), plus particulièrement de l'ordre de 1,1 à 25 équivalents molaires. De préférence, cette proportion est de l'ordre de 2 à 20 équivalents molaires. Un tel procédé est par exemple décrit dans le brevet US -A 2 681 354.

Cette opération peut être réalisée en outre en présence d'un tiers solvant. A titre d'exemple de solvant, on peut citer les hydrocarbures aliphatiques saturés, comme l'heptane ou l'octane, les hydrocarbures aromatiques, tels que le toluène, le cumène, les cétones comme notamment l'octanone-2, les alcools secondaires ou tertiaires, tels que l'isopropanol, le tertiobutanol, et l'eau.

La réaction peut être mise en oeuvre en l'absence de catalyseur, ou si nécessaire en présence d'un catalyseur. Ce catalyseur peut être acide, de préférence du type acide de Lewis, comme par exemple le trifluorure de bore, le tétrachlorure d'étain, le pentachlorure d'antimoine. On peut de même mettre en oeuvre un catalyseur basique choisi notamment parmi les hydroxydes de métal alcalin, tel que NaOH, KOH, les alcoolates de métal alcalin ou alcalino-terreux, tels que le méthylate de sodium ou encore le tertiobutylate de potassium. On peut de même citer comme catalyseurs convenables les dérivés de terres-rares, comme notamment les phosphates, les carbonates, les oxydes de lanthane.

Si l'on emploie un catalyseur, les quantités mises en oeuvre correspondent à environ 0,05 à 10%, de préférence environ 0,1 à 1% en poids par rapport à la masse réactionnelle.

Dans les compositions selon l'invention le rapport en poids de la matière active à l'amidoamine ou au mélange d'amidoamines de formules (1) et (2) peut varier entre 1/5 et 10/1.

Ce rapport est bien entendu adapté selon les conditions d'emploi envisagées pour la composition correspondante. Toutefois, il se situe de préférence entre 1/2 et 6/1 et préférentiellement entre 2/1 et 4/1.

Dans le cas particulier de matières actives telles que les dérivés d'aminophosphates, le rapport en poids s'entend en matière active exprimée sous forme d'équivalent acide.

La composition est de préférence hydrosoluble.

Elle peut en outre se présenter sous la forme d'un concentré liquide aqueux destiné à être dilué au moment de son emploi, en vue de sa pulvérisation. Dans ce type de concentré, la concentration en matière(s) active(s) peut varier entre 50 g/l et 500 g/l.

Il peut également s'agir d'une formulation solide du type granulés, poudres, tablettes ou comprimés. Dans ce cas, la ou les amidoamines polyalcoxylées y sont présentes sous une forme solide obtenue par exemple par adsorption sur tout support inerte approprié.

Bien entendu, la composition selon l'invention peut contenir en outre d'autres additifs. Il peut s'agir par exemple d'agents anti-gel comme le glycérol ou l'éthylène glycol, de colorants, d'agents anti-mousses et/ou de tensioactifs.

Elle peut également contenir une quantité efficace d'au moins une autre matière active phytosanitaire. Il peut en particulier s'agir d'herbicides choisis parmi les produits suivants : simazine, isoxaben, atrazine, diuron, terbuthylazine, norflurazon, metamitron, chloridazon et sulfonyle urée, seuls ou combinés.

Les compositions selon l'invention, sous forme liquide ou bien solubilisées en milieu aqueux, sont compatibles en dilution avec des suspensions et/ou solutions concentrées de matières actives phytosanitaires de natures différentes. On n'observe aucun phénomène de floculation et/ou de démixtion lors des mélanges des solutions respectives.

La présente invention se rapporte également aux applications de la composition selon l'invention à titre d'insecticide, d'herbicide, fongicide ou d'engrais.

La composition selon l'invention est préparée par simple mélange de la matière active phytosanitaire hydrosoluble avec une ou plusieurs amidoamines polyalcoxylées précitées, éventuellement en présence d'autres additifs.

La composition selon l'invention peut être préparée bien avant son utilisation mais aussi juste avant celle-ci. Dans ce dernier cas, la ou les amidoamines polyalcoxylées sont ajoutées à la matière active phytosanitaire, éventuellement aux autres additifs, lors de la dilution de la formulation dans la cuve de pulvérisation (tank mix).

Des exemples concrets mais non limitatifs de l'invention vont maintenant être présentés.

### EXEMPLE 1

On prépare une formulation dont la concentration en glyphosate est de 360 g/l exprimée en équivalent acide, par mélange sous agitation des composés suivants :
* sel d'isopropylamine de glyphosate (46 % en acide) 779 g
* amidoamines (*) 100 g
* eau 301 g
(*) les amidoamines mises en oeuvre correspondent à un mélange d'hydroxyéthylcocoylamidoamines polyéthoxylées comprenant 3 moles d'oxyde d'éthylène.

Le tableau ci-dessous montre que la formulation obtenue est stable dans le temps à des températures de stockage différentes :

| **CONDITIONS DE STOCKAGE** | **RESULTATS** |
|---|---|
| initialement | 1 phase limpide, pH = 5,1 |
| 2 mois à 25°C | 1 phase limpide, pH = 5,1 |
| 2 mois à 54°C | 1 phase limpide, pH = 5,1 |
| 2 mois à 60°C | 1 phase limpide, pH = 5,1 |

En outre, les résultats biologiques obtenus avec la formulation selon l'invention, réalisés sur dicotylédones et sur graminées, et notamment après 30 jours de traitement, sont similaires à ceux obtenus avec des formulations comprenant des amines éthoxylées employées dans l'art antérieur.

### EXEMPLE 2

On prépare la formulation suivante, comprenant une concentration en glyphosate de 450 g/l exprimée en équivalent acide, par mélange sous agitation des composés suivants :
* sel d'isopropylamine de glyphosate (46 % en acide) 979 g
* amidoamines (*) 100 g
* eau 121 g
(*) les amidoamines mises en oeuvre correspondent à un mélange d'hydroxyéthylcocoylamidoamines polyéthoxylées comprenant 3 moles d'oxyde d'éthylène.

Le tableau ci-dessous montre que la formulation obtenue est stable dans le temps à des températures de stockage différentes :

| **CONDITIONS DE STOCKAGE** | **RESULTATS** |
|---|---|
| initialement | 1 phase limpide, pH = 5,2 |
| 2 mois à 25°C | 1 phase limpide, pH = 5,3 |
| 2 mois à 54°C | 1 phase limpide, pH = 5,3 |
| 2 mois à 60°C | 1 phase limpide, pH = 5,3 |

Les résultats biologiques obtenus avec la formulation selon l'invention, réalisés sur dicotylédones et sur graminées, et notamment après 30 jours de traitement, sont similaires à ceux obtenus avec des formulations comprenant des amines éthoxylées employées dans l'art antérieur.

## Revendications

1. Composition comprenant à titre de principe actif au moins une matière active phytosanitaire hydrosoluble, **caractérisée en ce qu'**elle comprend en outre une quantité efficace d'au moins une amidoamine polyalcoxylée de formule moyenne (1) ou (2) : 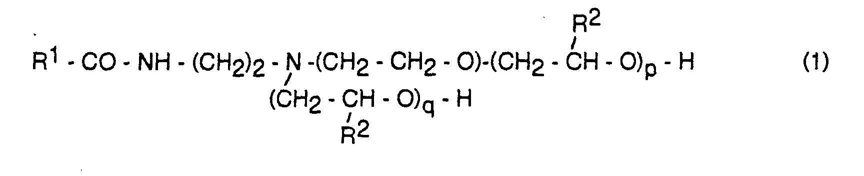 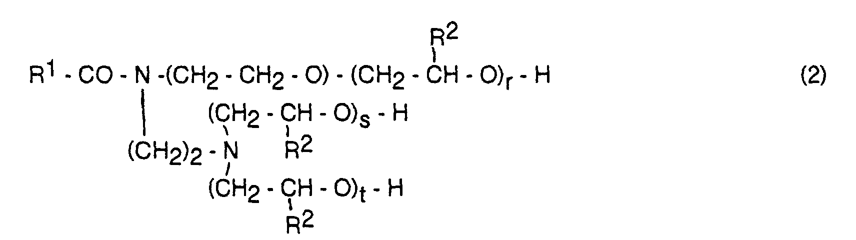 dans lesquelles :
- R¹, identiques ou différents, représentent un groupe hydrocarboné en C₂-C₂₂ alkyle ou alkényle linéaire ou ramifié, cycloalkyle ou alkylaryle,
- R², identiques ou différents, représentent l'hydrogène ou un radical alkyle en C₁-C₄,
- p, q, r, s et t, identiques ou différents, représentent des nombres entiers pouvant être nuls avec p + q compris entre 1 et 20 et r + s + t compris entre 1 et 20.

2. Composition selon la revendication 1, **caractérisé en ce qu'**elle comprend une quantité efficace d'un mélange d'amidoamines polyalcoxylées de formules moyennes (1) et (2).

3. Composition selon l'une quelconque des revendications 1 ou 2, **caractérisée en ce qu'**elle comprend au moins une amidoamine polyalcoxylée dans laquelle le radical R² représente l'hydrogène ou un radical méthyle.

4. Composition selon l'une quelconque des revendications précédentes, **caractérisée en ce qu'**elle comprend au moins une amidoamine polyalcoxylée dans laquelle les coefficients p, q, r, s et t, identiques ou différents, sont tels que p + q est compris entre 2 et 10 et r + s + t est compris entre 2 et 10.

5. Composition selon l'une quelconque des revendications précédentes, **caractérisée en ce qu'**elle comprend au titre d'amidoamines polyalcoxylées, des hydroxyéthylcocoylamidoamines polyéthoxylées comprenant 3 moles d'oxyde d'éthylène, correspondant à la formule (1) et/ou (2).

6. Composition selon l'une quelconque des revendications précédentes, **caractérisée en ce que** la matière active phytosanitaire est choisie parmi les insecticides, les herbicides, les fongicides, et les éléments nutritifs favorisant la croissance et le développement des plantes.

7. Composition selon la revendication 5, **caractérisée en ce que** la matière active est un herbicide et de préférence un dérivé aminophosphate.

8. Composition selon l'une quelconque des revendications 6 ou 7, **caractérisée en ce que** l'aminophosphate est de préférence choisi parmi le glyphosate, le sulfosate, le glufosinate, ainsi que les sels organiques ou inorganiques respectifs des composés précités.

9. Composition selon l'une quelconque des revendications 6 à 8, **caractérisée en ce qu'**il s'agit du glyphosate ou de ses dérivés.

10. Composition selon la revendication 9, **caractérisée en ce que** le dérivé du glyphosate est choisi parmi ses sels de métaux alcalins, ses sels d'ammonium, substitués ou non, ou encore ses sels de sulfonium, seuls ou en combinaison.

11. Composition selon l'une quelconque des revendications 1 à 10, **caractérisée en ce que** le rapport en poids de la matière active phytosanitaire, exprimée en équivalent acide, et de la ou des amidoamines polyalcoxylées est compris entre 1/5 et 10/1.

12. Composition selon la revendication 11, **caractérisée en ce que** le rapport varie de préférence entre 1/2 et 6/1 et préférentiellement entre 2/1 et 4/1.

13. Composition selon l'une des revendications 1 à 12, **caractérisée en ce qu'**elle se présente sous la forme d'un concentré liquide contenant entre 50 g/l et 500 g/l en matière active.

14. Composition selon l'une des revendications 1 à 12, **caractérisée en ce qu'**elle se présente sous la forme d'un solide.

15. Composition selon l'une quelconque des revendications précédentes, **caractérisée en ce qu'**elle comprend en outre au moins un composé choisi parmi les agents anti-gel, les colorants, les agents anti-mousses et les tensioactifs.

16. Composition selon l'une quelconque des revendications précédentes, **caractérisée en ce qu'**elle comprend en outre une quantité efficace d'au moins une autre matière active comme un herbicide choisi parmi les produits suivants : simazine, ixobazen, atrazine, diuron, terbuthylazine, norflurazon, metamitron, chloridazon ou sulfonyle urée, seuls ou combinés.

17. Utilisation d'une composition telle que définie dans l'une des revendications précédentes à titre d'herbicide, de fongicide ou d'engrais.

## Patentansprüche

1. Zusammensetzung, die als Wirkstoff mindestens einen wasserlöslichen phytosanitären Wirkstoff umfasst, **dadurch gekennzeichnet, dass** sie darüber hinaus eine wirksame Menge von mindestens einem polyalkoxylierten Amidoamin der mittleren Formel (1) oder (2) umfasst: 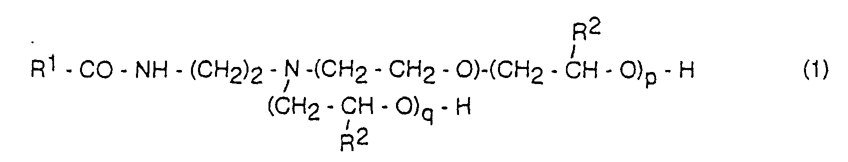 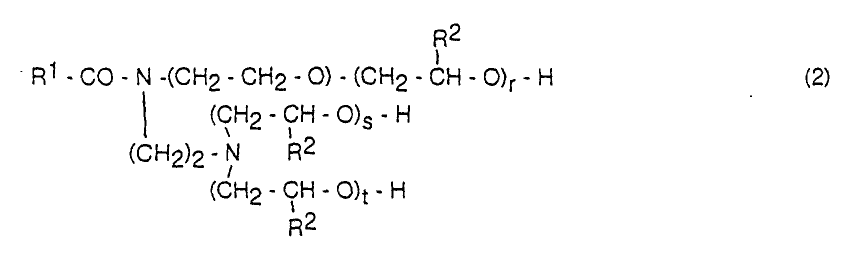 in denen:
- R¹, die gleich oder verschieden sind, für eine Gruppe, die linearen oder verzweigten C₂-C₂₂-Alkyl- oder -Alkenyl-, -Cycloalkyl- oder -Alkylaryl-Kohlenwasserstoff enthält, stehen,
- R², die gleich oder verschieden sind, für Wasserstoff oder einen C₁-C₄-Alkylrest stehen,
- p, q, r, s und t, die gleich oder verschieden sind, für ganze Zahlen stehen, die Null sein können, wobei p + q zwischen 1 und 20 beträgt und r + s + t zwischen 1 und 20 beträgt.

2. Zusammensetzung nach Anspruch 1, **dadurch gekennzeichnet, dass** sie eine wirksame Menge einer Mischung von polyalkoxylierten Amidoaminen der mittleren Formeln (1) und (2) umfasst.

3. Zusammensetzung nach einem der Ansprüche 1 oder 2, **dadurch gekennzeichnet, dass** sie mindestens ein polyalkoxyliertes Amidoamin umfasst, in dem der Rest R² für Wasserstoff oder einen Methylrest steht.

4. Zusammensetzung nach einem der vorangegangenen Ansprüche, **dadurch gekennzeichnet, dass** sie mindestens ein polyalkoxyliertes Amidoamin umfasst, in dem die Koeffizienten p, q, r, s und t, die gleich oder verschieden sind, so sind, dass p + q zwischen 2 und 10 beträgt und r + s + t zwischen 2 und 10 beträgt.

5. Zusammensetzung nach einem der vorangegangenen Ansprüche, **dadurch gekennzeichnet, dass** sie als polyalkoxylierte Amidoamine polyethoxylierte Hydroxyethylcocoylamidoamine, die 3 Mole Ethylenoxid umfassen und der Formel (1) und/oder (2) entsprechen, umfasst.

6. Zusammensetzung nach einem der vorangegangenen Ansprüche, **dadurch gekennzeichnet, dass** der phytosanitäre Wirkstoff unter den Insektiziden, Herbiziden, Fungiziden und den Nährstoffen, die das Wachstum und die Entwicklung der Pflanzen begünstigen, ausgewählt wird.

7. Zusammensetzung nach Anspruch 5, **dadurch gekennzeichnet, dass** der Wirkstoff ein Herbizid und vorzugsweise ein Aminophosphatderivat ist.

8. Zusammensetzung nach einem der Ansprüche 6 oder 7, **dadurch gekennzeichnet, dass** das Aminophosphat vorzugsweise unter Glyphosat, Sulfosat, Glufosinat wie auch den entsprechenden organischen oder anorganischen Salzen der vorerwähnten Verbindungen ausgewählt wird.

9. Zusammensetzung nach einem der Ansprüche 6 bis 8, **dadurch gekennzeichnet, dass** es sich um Glyphosat oder dessen Derivate handelt.

10. Zusammensetzung nach Anspruch 9, **dadurch gekennzeichnet, dass** das Glyphosatderivat unter dessen Alkalimetallsalzen, dessen Ammoniumsalzen, substituiert oder nicht substituiert, oder ferner dessen Sulfoniumsalzen, allein oder in Kombination, ausgewählt wird.

11. Zusammensetzung nach einem der Ansprüche 1 bis 10, **dadurch gekennzeichnet, dass** das Gewichtsverhältnis des phytosanitären Wirkstoffs, ausgedrückt in Säureäquivalent, und des oder der polyalkoxylierten Amidoamine zwischen 1/5 und 10/1 beträgt.

12. Zusammensetzung nach Anspruch 11, **dadurch gekennzeichnet, dass** das Verhältnis vorzugsweise zwischen 1/2 und 6/1 und bevorzugt zwischen 2/1 und 4/1 variiert.

13. Zusammensetzung nach einem der Ansprüche 1 bis 12, **dadurch gekennzeichnet, dass** sie in Form eines flüssigen Konzentrats, das zwischen 50 g/l und 500 g/l an Wirkstoff enthält, vorliegt.

14. Zusammensetzung nach einem der Ansprüche 1 bis 12, **dadurch gekennzeichnet, dass** sie in Form eines Feststoffs vorliegt.

15. Zusammensetzung nach einem der vorangegangenen Ansprüche, **dadurch gekennzeichnet, dass** sie außerdem mindestens eine Verbindung, ausgewählt unter den Antigel-Mitteln, den Färbemitteln, den Schaumverhütungsmitteln und den grenzflächenaktiven Mitteln, umfasst.

16. Zusammensetzung nach einem der vorangegangenen Ansprüche, **dadurch gekennzeichnet, dass** sie außerdem eine wirksame Menge von mindestens einem anderen Wirkstoff, wie ein Herbizid, ausgewählt unter den folgenden Produkten: Simazin, Ixobazen, Atrazin, Diuron, Terbutylazin, Norflurazon, Metamitron, Chloridazon oder Sulfonylharnstoff, allein oder in Kombination, umfasst.

17. Verwendung einer Zusammensetzung, wie in einem der vorangegangenen Ansprüche definiert, als Herbizid, Fungizid oder Düngemittel.

## Claims

1. Composition including as active principle at least one water-soluble plant protection active substance, **characterized in that** it additionally includes an effective quantity of at least one polyalkoxylated amidoamine of average formula (1) or (2): 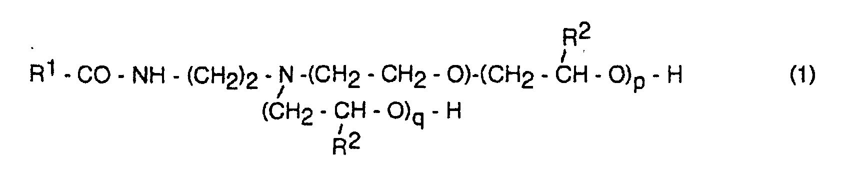 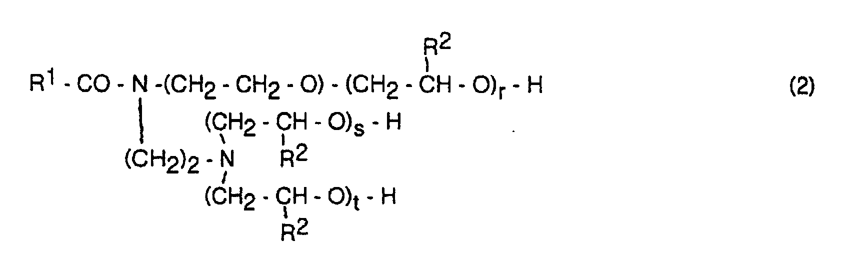 in which:
- R¹, which are identical or different, denote a linear or branched alkyl or alkenyl, cycloalkyl or alkylaryl C₂-C₂₂ hydrocarbon group,
- R², which are identical or different, denote hydrogen or a C₁-C₄ alkyl radical,
- p, q, r, s and t, which are identical or different, denote integers which can be zero with p + q being between 1 and 20 and r + s + t being between 1 and 20.

2. Composition according to Claim 1, **characterized in that** it includes an effective quantity of a mixture of polyalkoxylated amidoamines of average formulae (1) and (2).

3. Composition according to either of Claims 1 and 2, **characterized in that** it includes at least one polyalkoxylated amidoamine in which the radical R² denotes hydrogen or a methyl radical.

4. Composition according to any one of the preceding claims, **characterized in that** it includes at least one polyalkoxylated amidoamine in which the coefficients p, q, r, s and t, which are identical or different, are such that p + q is between 2 and 10 and r + s + t is between 2 and 10.

5. Composition according to any one of the preceding claims, **characterized in that** it includes, as polyalkoxylated amidoamines, polyethoxylated hydroxyethylcocoylamidoamines containing 3 moles of ethylene oxide, corresponding to formula (1) and/or (2).

6. Composition according to any one of the preceding claims, **characterized in that** the plant protection active substance is chosen from insecticides, herbicides, fungicides and nutritive elements promoting the growth and development of plants.

7. Composition according to Claim 5, **characterized in that** the active substance is a herbicide and preferably an aminophosphate derivative.

8. Composition according to either of Claims 6 and 7, **characterized in that** the aminophosphate is preferably chosen from glyphosate, sulfosate, glufosinate and the respective organic or inorganic salts of these compounds.

9. Composition according to any one of Claims 6 to 8, **characterized in that** the substance is glyphosate or its derivatives.

10. Composition according to Claim 9, **characterized in that** the derivative of glyphosate is chosen from its alkali metal salts, its substituted or unsubstituted ammonium salts or its sulphonium salts, alone or as a mixture.

11. Composition according to any one of Claims 1 to 10, **characterized in that** the ratio by weight of the plant protection active substance, expressed as acid equivalent, to the polyalkoxylated amidoamine(s) is between 1/5 and 10/1.

12. Composition according to Claim 11, **characterized in that** the ratio preferably varies between 1/2 and 6/1 and preferentially between 2/1 and 4/1.

13. Composition according to one of Claims 1 to 12, **characterized in that** it is in the form of a liquid concentrate containing between 50 g/l and 500 g/l of active substance.

14. Composition according to one of Claims 1 to 12, **characterized in that** it is in the form of a solid.

15. Composition according to any one of the preceding claims, **characterized in that** it additionally includes at least one compound chosen from antifreezing agents, colorants, antifoaming agents and surfactants.

16. Composition according to any one of the preceding claims, **characterized in that** it additionally comprises an effective quantity of at least one other active substance such as a herbicide chosen from the following products: simazine, ixobazen, atrazine, diuron, terbuthylazine, norflurazon, metamitron, chloridazon and sulphonylurea, alone or as a mixture.

17. Application of a composition such as defined in one of the preceding claims as herbicide, fungicide or fertilizer.
